# EUROPEAN PATENT SPECIFICATION

(11) **EP 3 854 138 B1**
(45) Date of publication and mention of the grant of the patent: **19.03.2025**
(21) Application number: 18934272.8
(22) Date of filing: 19.09.2018
(51) Int. Cl.: H04W 28/08, H04W 36/22, H04W 28/02

(54) **A NETWORK NODE AND METHOD IN A WIRELESS COMMUNICATIONS NETWORK**
NETZWERKKNOTEN UND VERFAHREN IN EINEM DRAHTLOSKOMMUNIKATIONSNETZWERK
NOEUD DE RÉSEAU ET PROCÉDÉ DANS UN RÉSEAU DE COMMUNICATIONS SANS FIL

(43) Date of publication of application: 28.07.2021
(73) Proprietor: Telefonaktiebolaget LM Ericsson (publ), 164 83 Stockholm (SE)
(72) Inventor: DUTTA, Somnath, Kolkata 700090 (IN); SARKAR, Debasish, Frisco, Texas 75034 (US); SINGH, Shikha, New Delhi 110038 (IN); SEN, Ayan, Bangalore 560066 (IN)
(74) Representative: Ericsson
(86) International application number: PCT/IN2018/050605
(87) International publication number: WO 2020/058983

(56) References cited:
- US-A1- 2014 176 659
- US-A1- 2016 192 239
- US-A1- 2017 265 116
- US-A1- 2017 303 179
- US-A1- 2017 303 179
- US-B2- 9 661 546
- ERICSSON: "Analysis of SON for UE type", vol. RAN WG3, no. Fukuoka, Japan; 20130520 - 20130524, 11 May 2013 (2013-05-11), XP050701004, Retrieved from the Internet <URL:http://www.3gpp.org/ftp/tsg_ran/WG3_Iu/TSGR3_80/Docs/> [retrieved on 20130511]

## Description

### TECHNICAL FIELD

Embodiments herein relate to a network node in a wireless communications network, and a method therein. In particular, they relate to handling of load balancing of UEs in a wireless communications network.

### BACKGROUND

In a typical wireless communication network, wireless devices, also known as wireless communication devices, mobile stations, stations (STA) and/or User Equipments (UE), communicate via a Local Area Network such as a WiFi network or a Radio Access Network (RAN) to one or more core networks (CN). The RAN covers a geographical area which is divided into service areas or cell areas with each service area or cell area being served by a radio network node such as a radio access node e.g., a Wi-Fi access point or a radio base station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques can significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

### Uplink Triggered Inter Frequency Handover - Mobility

A handover is a transferring of an ongoing call or data session in a wireless device, from one carrier, a source carrier, connected to a core network to another carrier, a target carrier, connected to the core network. A handover is commonly performed when a wireless device moves from a geographical coverage of a first cell or carrier to a geographical coverage of a second cell or carrier. A handover may be performed as a result of bad radio conditions in the source carrier, e.g. when the wireless device is moving. The wireless device will then be transferred to a different carrier exhibiting better radio conditions, the target carrier. An Inter-Frequency Handover (IFHO) is a handover from a source frequency carrier to a target frequency carrier. Hence, an UpLink (UL) triggered IFHO is a handover performed based on a wireless device encountering bad UL radio conditions. The communication session of the wireless device is then transferred to a different frequency carrier with estimated better UL radio conditions for the given wireless device.

Mobility is a capability of a wireless device to be used while moving. A wireless network supporting mobility therefore provides a way of handling mobility. Uplink triggered IFHO adds functionality of mobility handling at poor UL coverage by determining when to perform an IFHO based on UL quality. The UL quality may for instance be determined from the Signal-to-Interference-plus-Noise Ratio (SINR) of the current carrier. Thus, the UL quality became a mobility triggering element in 4G and 5G.

Previous mobility handling or control at poor coverage only considered DownLink (DL) quality. Since the correlation between DL quality and UL quality is low for a Frequency-Division Duplex (FDD) system, communication sessions used to fail or drop due to poor uplink quality while DL quality remained acceptable. To mitigate this problem the DL search zone was increased by adding offsets or margins in DL thresholds. This resulted in unnecessary handovers and were ultimately not the solution needed. A search zone when used herein is a typical coverage area of a serving cell defined by an entry and exit criteria using distinct coverage thresholds, e.g. Reference Signal Received Power (RSRP) or Reference Signal Received Quality (RSRQ), where the UE searches for better cell. RSRP when used herein is a measurement of the received power level at the UE from a network cell, and measured by a UE. The RSRQ when used herein is a measurement which indicates the quality of a received reference signal corresponding to a network cell at the UE and measured by the UE.

With UL-triggered inter-frequency mobility, a network node will perform a supervision of the uplink quality for each connected wireless device. When a wireless device encounters bad uplink quality, it is moved to an inter-frequency neighbouring cell reporting better estimated uplink quality for the given wireless device. Through these measures there is no longer a need to add an extra DL margin to mitigate uplink quality problems, an action which would in turn increase unnecessary measurements and handover as described above.

### Load Balancing

Load Balancing (LB) is used to efficiently utilize network resources on different carrier frequencies by regulating the unbalanced distribution of data traffic and/or users such as wireless devices. Thus, a carrier having a large number of wireless devices to handle may transfer some of these wireless devices to a different carrier having a lower burden or load in terms of users or data traffic. This process of transferring a wireless device due to carrier load from a source carrier to a target carrier may be referred to as performing a load balancing action. Certain load balancing entities like load balancing (lb) threshold, lb ceiling, Subscription ratio, performs an entire operation of load balancing. Other parameters such as A5 Threshold 1 Reference Signal Receive Power (a5Threshold1Rsrp), A5 Threshold 2 Reference Signal Receive Power (a5Threshold2Rsrp), and Hysteresis A5 (hysteresisA5) are configured for each source cell and are used to set the thresholds and hysteresis for inter-frequency event A5 measurement reporting in the UE selected for load balancing action. Hysteresis when used herein is an additional margin added to and subtracted from a5Threshold1Rsrp to regulate entry to and exit from A5 measurement region respectively and thereby prevent false action based on fast fading. Inter-frequency A5 measurements reporting is a measurement report sent by the UE when serving cell RSRP drops below a5Threshold1Rsrp + hysteresisA5 reporting Interfrequency Neighbour cells in order of decreasing RSRP or RSRQ which satisfy A5Threshold2Rsrp + hysteresisA5 condition.

Thus, an UL triggered inter frequency handover feature measures the UL SINR of a current source frequency carrier or cell and estimates the UL SINR of the target frequency carrier or cell. If the estimated SINR-values satisfy certain conditions, then the wireless device will be moved out from the current carrier to the target carrier. Simultaneously, load balancing functionality is running in parallel in both the source carriers and the target carriers. When implemented with proper thresholds these functionalities working together ensures efficient user flow or traffic flow in the system.

However, in current network communication scenarios, the end users such as wireless devices, may encounter to and fro movement between carriers occurring while making a transition from one frequency carrier to another frequency carrier. The transition may e.g. be due to an Inter Frequency Handover (IFHO) or a Load Balancing (LB) action. It is a common occurrence that a wireless device moving from a first frequency carrier to a second frequency carrier by e.g. a normal IFHO, is being immediately moved back through a load balancing action to the first frequency carrier the moment it lands in the second frequency carrier. This changing back and forth between carriers, also referred to as toggling between carriers, degrades the communication quality such as call quality which in turn highly affects the end user experience. Call degradation due to toggling is a problem for e.g. Voice Over Long-Term Evolution (VoLTE), Mobile Broadband (MBB) and Enhanced Mobile Broadband (eMBB).

End user experience is of utmost importance and priority for any Service Operator.

Any disturbance or toggling due to mobility must therefore be taken care of in a robust manner. Unnecessary toggling e.g. due to too early HO, too late HO, oscillating HO or IFHO followed by a quick LB action resulting in the UE connected to the same cell or frequency carrier from where it initially came degrades the performance of the communications network. Thus, it is of vital importance to reduce such toggling.

Another example can be found in non patent document ERICSSON: "Analysis of SON for UE type", 3GPP DRAFT; R3-130919, 11 May 2013 and in patent document US 2017/303179 A1 (MITSUI KATSUHIRO [JP] ET AL) 19 October 2017.

### SUMMARY

As part of developing embodiments herein, a problem was identified by the inventors, and will first be discussed.

UL triggered mobility and inter frequency mobility are two of the most important features when the entire performance of a mobility scenario for a network is considered. However, as has been described above there are certain impairments which may lead to an unnecessary increase in overall handovers and hence an increase in the overall toggling between carriers.

Currently there exists no proper mechanism to handle the toggling or "ping pong" of a UE from a first carrier to a second carrier by UL triggered IFHO followed by a subsequent load balancing action transferring the UE from the second carrier back to the first carrier.

A problem is that there is no fairness in the UE selection procedure for LB action. For instance, the last UE to arrive in a target frequency carrier may be identified as LB candidate instead of an active UE which has resided in the target frequency carrier for the longest time period being selected.

An object of embodiments herein is to improve the load balancing process to increase the performance of a wireless communications network.

The invention is defined by the appended independent claims and further embodiments are described by the dependent claims.

By evaluating whether or not the UEs have resided at the carrier for a time period which is below a first threshold value and deciding to perform a further evaluation on those UEs, it may be ensured that those UEs that have recently arrived at the carrier are not immediately identified for LB action which may lead to them being sent back to their source carrier. This results in an improved LB procedure which reduces toggling and thus improves network performance.

An advantage of embodiments herein is that they help to derive the true benefits out of the UL triggered IFHO functionality since immediate load based handover back to the carrier from where the UL triggered mobility was initiated is prevented. Thus, the UEs will stay for longer time in a carrier where they will have better UL radio conditions.

### BRIEF DESCRIPTION OF THE FIGURES

- Figure 1: is a schematic block diagram illustrating embodiments of a wireless communications network.
- Figure 2: is a flowchart depicting a claimed embodiment of a method in a network node.
- Figure 3a and b: are schematic block diagrams illustrating embodiments of a wireless communications network.
- Figure 4a-c: are flowcharts depicting embodiments of a method in a network node.
- Figure 5: is a flowchart depicting embodiments of a method in a network node.
- Figure 6a and b: are flowcharts depicting embodiments of a method in a network node.
- Figure 7a and b: are schematic block diagrams illustrating embodiments of a network node.
- Figure 8: schematically illustrates a telecommunication network connected via an intermediate network to a host computer.
- Figure 9: is a generalized block diagram of a host computer communicating via a base station with a user equipment over a partially wireless connection.
- Figures 10-13: are flowcharts illustrating methods implemented in a communication system including a host computer, a base station and a user equipment.

### DETAILED DESCRIPTION

Embodiments herein are designed to make Inter-Frequency (IF) LB mechanisms more robust by creating a fair LB candidate identification procedure for cases when the LB candidates comprise UEs which have recently arrived in a target cell following poor UL condition in their respective source cells. This ensures that by creating a time period threshold value that gives sufficient hysteresis between the time of arrival, e.g. through UL triggered IFHO, and the time of departure, e.g. through IF LB, the probability of the UL radio condition improving in the target cell of the IF LB mechanism increases. This potentially minimizes the risk of the LB candidate UEs ending up in the UL search zone, which is an advantage since within the search zone the UE will be forced to perform IF measurements triggered by poor UL coverage in the cell eventually leading to the UE once again moving back to the previous frequency cell. Also, end user perception is improved due to reduced HO interruption times. This is performed while simultaneously monitoring the cell load threshold.

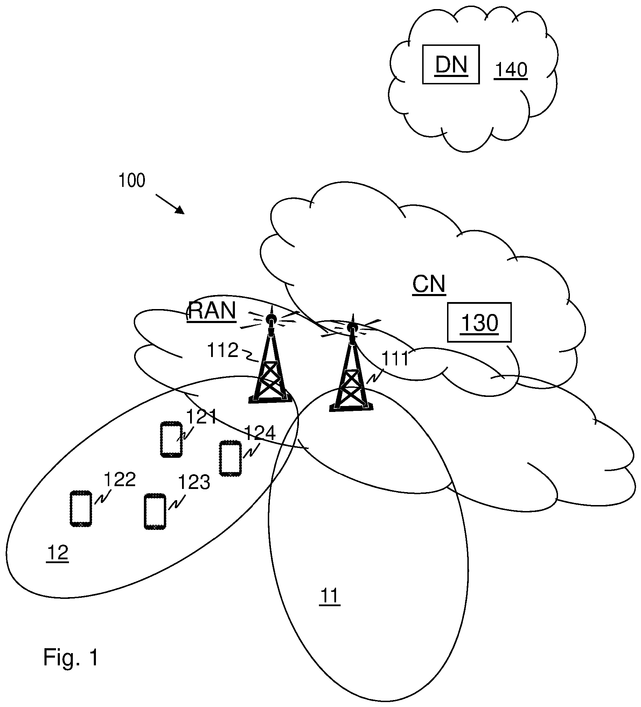

Figure 1 is a schematic overview depicting a wireless communications network 100 wherein embodiments herein may be implemented. The wireless communications network 100 comprises one or more RANs and one or more CNs 130. The wireless communications network 100 may use 5G NR but may further use a number of other different technologies, such as, Wi-Fi, (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

Network nodes such as a first network node 111 and a second network node 112, operate in the wireless communications network 100.

The first network node 111 provides radio coverage over a geographical area or a cell 11. The second network node 112, also referred to as the network node 112 herein, provides radio coverage over further geographical areas, such as e.g. a cell 12. The different cells 11, 12 may overlap. The network nodes 111, 112 may each be a transmission and reception point e.g. a radio access network node such as a base station, e.g. a radio base station such as a NodeB, an evolved Node B (eNB, eNode B), an NR Node B (gNB), a base transceiver station, a radio remote unit, an Access Point Base Station, a base station router, a transmission arrangement of a radio base station, a standalone access point, a Wireless Local Area Network (WLAN) access point, an Access Point Station (AP STA), an access controller, a UE acting as an access point or a peer in a Device to Device (D2D) communication, or any other network unit capable of communicating with a UE within the cell served by network node 112 depending e.g. on the radio access technology and terminology used.

A number of UEs operate in the wireless communications network 100, such as at least one UE 121, 122, 123, 124.

According to an example scenario the UE 121, the UE 122, the UE 123 and the UE 124 operate in the cell 12 served by the second network node 112.

The UEs 121, 122, 123, 124 may be grouped into different groups, e.g. a first group referred to as first UEs 121, 122 and a second group referred to as second UEs 123, 124, based on certain criteria which will be further elaborated below.

The at least one UE 121, 122, 123, 124, may e.g. be an NR device, a mobile station, a wireless terminal, an NB-IoT device, an eMTC device, a CAT-M device, a WiFi device, an LTE device and an a non-access point (non-AP) STA, a STA, that communicates via a base station such as e.g. the network node 110, one or more Access Networks (AN), e.g. RAN, to one or more core networks (CN). It should be understood by the skilled in the art that the UE relates to a non-limiting term which means any UE, terminal, wireless communication terminal, user equipment, (D2D) terminal, or node e.g. smart phone, laptop, mobile phone, sensor, relay, mobile tablets or even a small base station communicating within a cell.

The methods according to embodiments herein are performed by the network node 112. As an alternative, a Distributed Node DN and functionality, e.g. comprised in a cloud 140 as shown in Figure 1 may be used for performing or partly performing the methods.

For any UE 121, 122, 123, 124 coming to a second frequency (F2) carrier e.g. from a first frequency (F1) carrier, by having performed an uplink-triggered mobility action, it is not so good to immediately undergo a load balancing action and again get back to the F1 carrier. Thus, to ensure that this risk is minimized according to embodiments herein, a mechanism for evaluating the UEs 121, 122, 123, 124 whether they are suitable to be candidates for load balancing is provided by evaluating whether or not each of the at least one UEs 121, 122, 123, 124 has resided at the F2 carrier for a respective time period which is below a first threshold value, e.g. interpolating a logic of time-based threshold comparison. This may for example be performed by calculating the time difference between a time or time stamp when the load balancing evaluation commenced, and the time when the UL triggered IFHO was successfully completed. The time difference may then be compared with the minimum time duration for which each UE 121, 122, 123, 124 is supposed to stay in carrier F2.

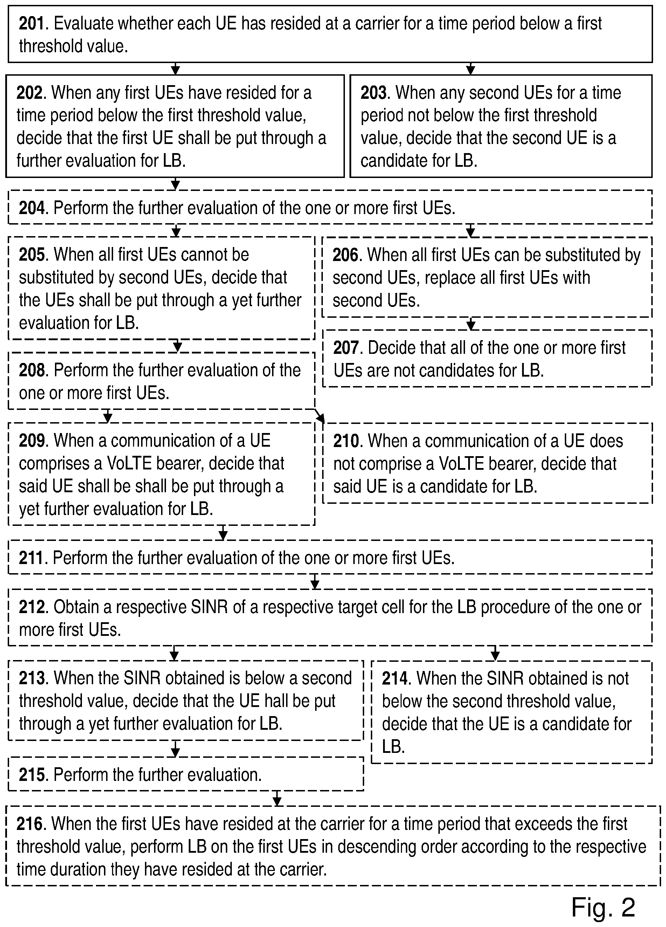

Example embodiments of a method performed by the network node 112 for handling load balancing of at least one UE 121, 122, 123, 124 will now be described with reference to a flowchart depicted in Figure 2. The at least one UE 121, 122, 123, 124 has performed a respective handover e.g. from a first Frequency (F1) carrier provided by the first network node 111 to a Second Frequency (F2) carrier provided by the network node 112 in a communication within a wireless communication network 100.

The method comprises the following actions, which actions may be taken in any suitable order. Dashed boxes represent optional method steps.

### Action 201

In load balancing there is a risk that the UE 121, 122, 123, 124 which have been handed over from the F1 carrier to the F2 carrier will bounce back and forth between the F1 and F2 carriers. In order to perform a fair load balancing UEs that have been in the F2 carrier for a long time shall be candidates for load balancing while UEs that have newly arrived to the F2 carrier and therefore have been in the F2 carrier for a short time shall not be candidates for load balancing. According to embodiments herein, the network node 112 thus first need to determine how long time each UE 121, 122, 123, 124 has spent in the current carrier, i.e. the second frequency carrier F2. Thus, the network node 112 evaluates whether or not each of the at least one UE 121, 122, 123, 124 has resided at the F2 carrier for a respective time period which is below a first threshold value. The first threshold value may be up to 50 seconds (s), such as 10-40s e.g. 30s.

### Action 202

In an example scenario, if any of the UEs 121, 122, 123, 124 have spent a very short time in the F2 carrier, i.e. a time period in the F2 carrier which is below a minimum time duration, this UE should be further evaluated before being flagged as a candidate for load balancing. The wording flagged as a candidate for LB when used herein means to be identified as a candidate for LB or chosen to be a candidate for LB. The time period in the F2 carrier which is below a minimum time duration is referred to as a time period which is below a time period being below a first threshold value. This may e.g. be the time duration for which each UE 121, 122, 123, 124 is supposed to stay in carrier F2. The time duration for which a UE is supposed to stay is related to a span of time which allows the estimated UL radio condition in the target carrier a higher possibility to improve and attain a sustainable UL radio condition value, preventing that the UE ends up in UL search zone in the target carrier. Thus, when any one or more first UEs 121, 122 out of the at least one UE 121, 122, 123, 124 have resided at the F2 carrier for a respective time period which is below the first threshold value the network node 110 decides that the one or more first UEs 121, 122 shall be put through a further evaluation for load balancing. The UEs that have resided at the F2 carrier for a respective time period below the first threshold value are referred to as the first UEs 121, 122.

### Action 203

If any of the UEs 121, 122, 123, 124 have spent a time period in the second frequency carrier F2 which is above the minimum time duration for which each UE 121, 122, 123, 124 is supposed to stay in carrier F2, it may be flagged as a candidate for load balancing. This is since the risk of to-and-fro movement is small in this scenario. Thus, when any one or more second UEs 123, 124 out of the at least one UE 121, 122, 123, 124 have resided at the F2 carrier for a respective time period which is not below the first threshold value, the network node 112 decides that each of the one or more second UEs 123, 124 is a candidate for load balancing.

The UEs that have resided at the F2 carrier for a respective time period not below the first threshold value, are referred to as the second UEs 123, 124.

### Action 204

When the network node 112 has decided that further evaluation for load balancing is needed it may according to some embodiments perform the further evaluation of the one or more first UEs 121, 122. Depending on the result of evaluation, the network node will then decide the continued course of action as described in the actions 205-207 below.

### Action 205

By substituting, also referred to as replacing, all of the first UEs 121, 122 with the second UEs 123, 124, the first UEs 121, 122 can be removed as potential candidates for load balancing. This increases the likelihood that the first UEs 121, 122 will spend the minimum amount of time required in the second frequency carrier F2 before being selected for load balancing and will thus improve the performance in the network.

In the evaluation performed under action 204 above, when all of the first UEs 121, 122 cannot be substituted by second UEs 123, 124, the network node 112 decides that the one or more first UEs 121, 122 shall be put through a yet further evaluation for load balancing. Thus, in this embodiment, if the first UEs 121, 122 cannot be replaced totally by the second UEs 123, 124 they will be further evaluated before it is decided whether they should be identified as load balancing candidates.

### Action 206

In the evaluation performed under action 204 above, when all of the one or more first UEs 121, 122 can be substituted by second UEs 123, 124, the network node 112 replaces all of the one or more first UEs 121, 122 with second UEs 123, 124.

### Action 207

Following the replacement described under action 206 above, the network node 112 decides that all of the one or more first UEs 121, 122 are not candidates for load balancing. As mentioned above, this increases the likelihood that the first UEs 121, 122 will spend the minimum amount of time required in the second frequency carrier F2 before being selected for load balancing and will thus improve the performance in the network

### Action 208

When the network node 112 has decided so, e.g. in action 205, it may according to some embodiments perform the further evaluation of the one or more first UEs 121, 122. Depending on the result of further evaluation, the network node 112 will then decide the continued course of action as described in the actions 209-210 below.

### Action 209

In the evaluation performed under action 208 above, when a communication of a UE 121, 122 out of the one or more first UEs 121, 122 comprises a Voice over Long Term Evolution, VoLTE bearer, the network node 112 decides that said UE 121, 122 shall be shall be put through a yet further evaluation for load balancing. A communication comprising VoLTE bearer such as a Quality of Service Class Identifier (QCI) 1 bearer, needs to be of high quality for an adequate end user experience. Thus, UEs 121, 122 comprising VoLTE bearers may preferably be yet further evaluated before being identified as load balancing candidates.

### Action 210

In the evaluation performed under action 208 above, when a communication of a UE 121, 122 out of the one or more first UEs 121, 122 does not comprise a VoLTE bearer, the network node 112 decides that said UE 121, 122 is a candidate for load balancing. UEs 121, 122 not comprising VoLTE bearers does not require as high a quality as UEs 121, 122 comprising VoLTE bearers and may therefore be identified as load balancing candidates.

### Action 211

When the network node 112 has decided so, e.g. in action 209, perform the further evaluation of the one or more first UEs 121, 122. Depending on the result of evaluation, the network node 112 will then decide the continued course of action as described in the actions 212-214 below.

### Action 212

As part of the evaluation performed under action 211 above, the network node 112 may obtain a respective SINR of a respective target cell for the load balancing procedure of the one or more first UEs 121, 122. Here the target cell means the new cell for the load balancing when being handed over from the F2 carrier e.g. back to the F1 carrier which provides the target cell. By obtaining information regarding the SINR of the target cell the network node 112 may determine whether a load balancing procedure resulting in a first UE 121, 122 landing in the target cell will end up in a better SINR condition compared to a predefined threshold. Otherwise the load balanced UE 121, 122 may end up in the UL search zone of the target cell. Depending on the obtained result the network node 112 will then decide the continued course of action as described in the actions 213-214 below.

### Action 213

When the SINR obtained according to action 212 above from a UE out of the one or more first UEs 121, 122 is below a second threshold value, the network node 112 decides that said UE shall be put through a yet further evaluation for load balancing. Thus, if the UE 121, 122 would end up in a worse estimated SINR condition at the target cell the network node 112 decides that the UE 121, 122 shall not be identified as a load balance candidate yet. Instead it will be put through a yet further evaluation. This reduces the likelihood of the UE 121, 122 ending up in the UL search zone of the target cell as explained under action 212 above. The second threshold value may e.g. be between 3 and 10 dB, e.g. 7dB.

### Action 214

When the SINR obtained from a UE of the one or more first UEs 121, 122 according to action 212 above is not below the second threshold value, the network node 112 decides that said UE is a candidate for load balancing. E.g., if the UE 121, 122 would end up in a better SINR condition at the target cell compared to the second threshold the network node 112 decides that the UE shall be a candidate for load balancing.

### Action 215

When the network node 112 has decided so, the network node 112 performs the further evaluation of the one or more first UEs 121, 122. Depending on the result of evaluation, the network node 112 will then decide the continued course of action as described in the action 216 below.

### Action 216

In the evaluation performed under any action above, when the one or more first UEs 121, 122 have resided at the F2 carrier for a respective time period that exceeds the first threshold value, the network node 112 performs load balancing on the one or more first UEs 121, 122 in descending order according to the respective time duration that the one or more first UEs 121, 122 have resided at the F2 carrier. The one or more first UEs 121, 122 may e.g. be arranged in descending order in a UE identity table of the network node 112. The UE identity table may e.g. be a table comprising selective information like UE Identity. IMSI, IMEI, timestamp of entry into the current cell following successful UL Triggered IFHO (A), timestamp for completing LB evaluation (B), current time stamp (C), time difference B-A, time difference B-C. The table is refreshed periodically and sorted in order of decreasing UE ageing in current cell following entry through UL Triggered IFHO. The UE from the top of the table may then be selected as the next UE to go through the load balancing process. This ensures a fair load balancing mechanism since the UE that has spent the longest time at the F2 carrier would be the first candidate selected. That candidate would then be followed by other UEs which have spent progressively shorter times at the F2 carrier.

Embodiments herein such as mentioned above will now be further described and exemplified. The text below is applicable to and may be combined with any suitable embodiment described above.

In order to handling load balancing and reducing e.g. the UE 121, 122, 123, 124 to-and-fro movement between different frequency carriers such the F1 carrier and the F2 carrier, the network node 112 applies the method for load balancing according to embodiments herein.

As an example, the network node 112 may apply an algorithm to automatically optimize the UE 121, 122, 123, 124 identification process in the F2 carrier. The identification process may be used for a successive load balancing mechanism performed after an UL triggered Inter-Frequency HandOver (IFHO) from another first frequency F1 carrier to this second frequency F2 carrier has occurred. The first frequency carrier F1 may also be referred to as source frequency carrier. A handover is a transferring of an ongoing call or data session from one carrier connected to the CN to another carrier connected to the CN. A handover may be performed based on different criteria, e.g. a bad radio condition in UL or DL or both in the source carrier. Thus, an UL triggered IFHO is a handover performed based on a UE 121, 122, 123, 124 encountering bad uplink radio conditions in the F1 carrier provided by the fist network node 111, also referred to as a source network node. The communication session of the UE 121, 122, 123, 124 is then transferred to a different frequency carrier, that is the F2 carrier provided by the network node 112 also referred to as the target network node 112.

In order to prevent the to-and-fro movement between different frequency carriers, also referred to herein as toggling between different carriers, the UEs 121, 122, 123, 124 qualified for load balancing are identified or shortlisted. Each one of the UEs 121, 122, 123, 124 are then evaluated by the network node 112 to determine whether they should be a candidate for load balancing, e.g. by executing time hysteresis and cell load factor threshold comparison algorithms on the identified UEs 121, 122, 123, 124. With time hysteresis is herein meant a minimum time which the UEs should spend in the target node before being classified as probable LB candidates for subsequent evaluation and offload. With cell load factor is herein meant the subscription ratio which is an indicator of the composite load handled by the node due the number of connected wireless devices, the Physical Resource Block (PRB) utilization and data volume. This will ensure that UEs 121, 122, 123, 124 initially identified for load balancing get a fair chance to remain on the second frequency carrier F2 for an extended time duration.

For example, in the event of an UE 121, 122, 123, 124 which has come from the first frequency F1 carrier after executing an UL Triggered IFHO to the second frequency F2 carrier is identified by the network node 112 for load balancing to the first frequency F1 carrier, an evaluation whether the UE 121, 122, 123, 124 should stay in the second frequency F2 carrier for an additional time will be performed. Thus, an appropriate fairness algorithm is performed to ensure that UEs 121, 122, 123, 124 which have spent the most time in the second frequency F2 carrier are identified for load balancing action. This algorithm will be explained in more detail below.

Below is an example described, wherein the UEs 121, 122, 123, 124 are evaluated whether or not they have resided at the F2 carrier for a respective time period which is below a first threshold value by interpolating a logic of time-based threshold comparison.

This may for example be performed by calculating the difference in time between the time or time stamp when the load balancing evaluation commenced, and the time when the UL triggered IFHO was successfully completed indicating the time of arrival of the target node. The difference in time may then be compared with the minimum time duration for which the UE 121, 122, 123, 124 is supposed to stay in carrier F2, e.g. the first threshold value.

The difference in time may then be greater than the minimum time duration each UE 121, 122, 123, 124 is supposed to stay in the carrier F2, before the load balancing may be initiated. This evaluation of the time spent in the F2 carrier and comparison with the minimum time duration to be spent in the carrier for each UE 121, 122, 123, 124 may be referred to as a temporal hysteresis or time hysteresis algorithm.

The load balancing method may at different check points focus on different characteristics of the UEs 121, 122, 123, 124 in the F2 carrier. Any of these checkpoints may be performed alone or combined with any one or more check points in a suitable way, i.e. any of these evaluations may be performed alone or combined with any one or more evaluations in a suitable way. E.g. as mentioned above, one possible check point may focus on substituting second UEs 123, 124 whose duration of staying in the F2 carrier already larger than the minimum time duration a UE is supposed to stay in the F2 carrier, with first UEs 121, 122 whose duration of stay in the second F2 carrier is shorter than the minimum time duration a UE is supposed to stay in the F2 carrier. The second UEs 123, 124 may comprise UEs coming to the F2 carrier via UL-triggered IFHO as long as their duration of stay is larger than the minimum time duration for which the UE 121, 122, 123, 124 is supposed to stay in carrier F2. In some following examples, the first UEs 121, 122 may also be referred to as pool M UEs and the second UEs 123, 124 may also be referred to as pool N UEs.

Another example of an evaluation such as a check point is to determine whether the cell load factor is above a certain threshold. This check may for example be performed on the first UEs 121, 122 who have spent less time than the minimum time duration for which the UE 121, 122, is supposed to stay in the F2 carrier. By keeping a check on the carrier loading a carrier overload condition may be avoided. If the carrier is at a risk of overloading, then the first UEs 121, 122 may be identified as load balancing candidates even though they have not spent a long enough time in the current carrier F2. The UEs 121, 122 may then be load balanced according to a First-in-First-Out algorithm, also referred to as ageing methodology. The temporal hysteresis algorithm described above may be performed continuously and the cell load factor may be checked in between each time check. This results in a robust process by ensuring that the carrier is not overloaded.

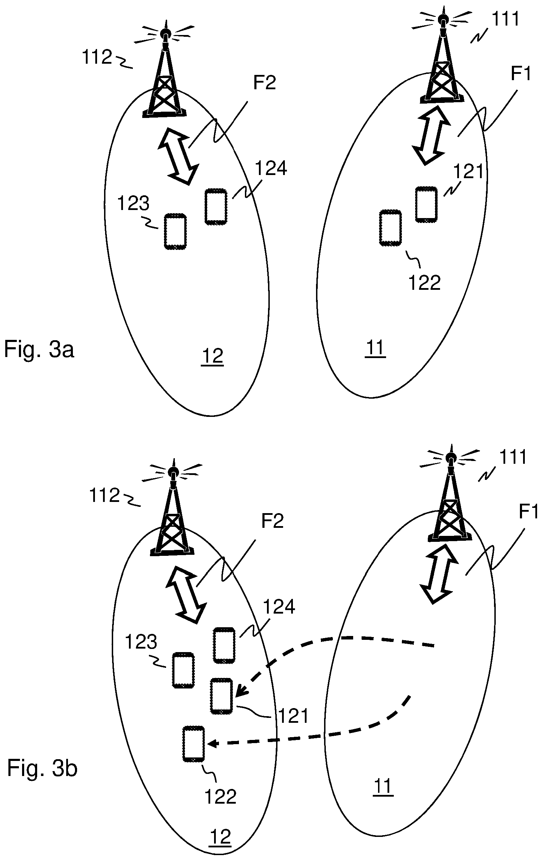

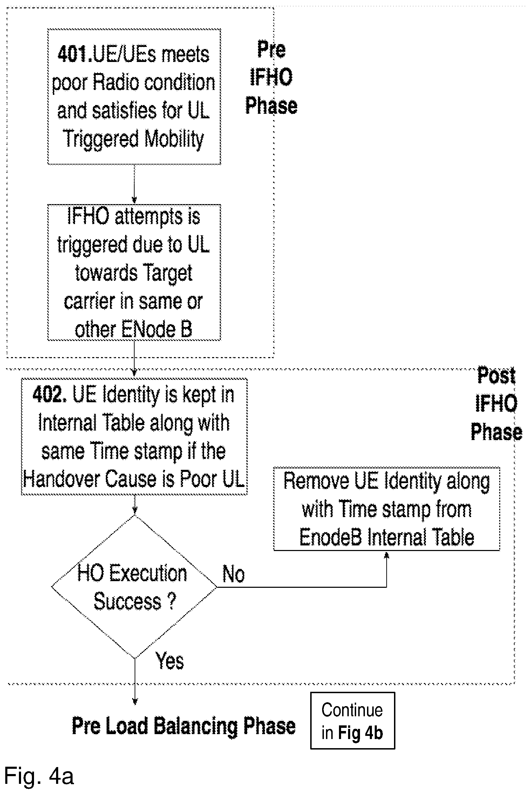

The method for handling load balancing of UEs 121, 122, 123, 124 will be further described in conjunction with an example scenario depicted in Figure 3a and 3b. The example scenario will be described using four phases which are also depicted in the flowchart in Figures 4a-4c and may proceed according to actions 401-405 described below.
Phase 1) Pre-UL triggered IFHO Phase
Phase 2) Post UL Triggered IFHO Phase
Phase 3) Pre Load Balancing Phase
Phase 4) Load Balancing Phase

The phases itemized above will be explained below.

### Pre-UL triggered IFHO Phase

As shown in Figure 3a, the UEs 121 and 122 are active users connected to the first frequency carrier F1 in the cell 11. Similarly, the UEs 123 and 124 are active users connected to the second frequency carrier F2 in the cell 12. In this example, the first frequency carrier F1 may also be referred to as the source carrier F1 and the second frequency carrier F2 may also be referred to as the target carrier F2.

Action 401. When UEs 121 and 122 connected to frequency carrier F1 in cell 11 encounter bad UL radio conditions wherein they are in the so called UL search zone, the UEs 121, 122 require to perform an UL triggered IFHO from the first frequency carrier F1 in cell 11 to the second frequency carrier F2 in cell 12. In figure 3a the cells 11 and 12 are depicted as being provided by different network nodes 111 and 112 respectively. However, cell 11 and Cell 12 may just as well belong to same network node.

### Post UL Triggered IFHO Phase

As mentioned above, the UEs 121 and 122 experiencing poor UL quality in cell 11 will perform a transition from the first frequency carrier F1 in cell 11 to the second frequency carrier F2 in cell 12 via UL triggered IFHO. Figure 3b illustrates the transition of UEs 121, 122 from the first frequency carrier F1 in cell 11 to the second frequency carrier F2 in cell 12. For ease of reference in this example scenario, UEs moving from cell 11 to cell 12 by virtue of UL Triggered IFHO and for whom the duration of stay in second frequency carrier F2 is shorter than the minimum time duration for which each UE 121, 122, 123, 124 is supposed to stay in carrier F2, i.e. are below the first threshold value, may be classified as first UEs 121, 122. They may also be referred to as pool M UEs. UEs which are already present in the second frequency carrier F2 in cell 12 and for whom the duration of stay in second frequency carrier F2 is larger than the minimum time duration for which each UE 121, 122, 123, 124 is supposed to stay in carrier F2 are classified as second UEs 123, 124. They may also be referred to as Pool N UEs. Load balancing is in the text below referred to as LB.

Action 402. Information of all respective first UEs 121, 122 may be stored in an internal UE Identity Table (UIT) of the network node 112. The information stored in the UIT for each UE 121, 122 may e.g. comprise the International Mobile Subscriber Identity (IMSI), the International Mobile Equipment Identity (IMEI), the UE entry time in cell 12 via the UL triggered IFHO, the time of starting LB evaluation, the current time C and the time spent in the second frequency carrier F2, Delta time 2. Delta time 2 may be calculated as the current time C minus the UE entry time in cell 12 via the UL triggered IFHO.

The entry in the UIT may be created when the network node 112 in the target cell which in this case is cell 12, sends an X2 UE CONTEXT RELEASE message to the first network node 111 source cell which in this case is cell 11, for an incoming UL Triggered IFHO.

### Pre-LB Phase

To ensure efficient use of resources in the communications network 100 on different carrier frequencies the network node 112 will to perform LB according to embodiments herein. Thus, a number of UEs 121, 122, 123, 124 may be identified for LB. In order to achieve efficient transition of appropriate UEs 121, 122, 123, 124 from the second frequency carrier F2, the network node 112 may evaluate the UEs 121, 122, 123, 124 identified for LB according to certain predetermined criteria. Appropriate UEs may in this context imply the UEs which have been active in the second frequency carrier F2 for the longest time period. Thus, in an example of embodiments herein, certain check points are incorporated in an evaluation algorithm resulting in identification of the UEs most suitable for LB action.

### Pool M Check

Action 403. For the UEs 121, 122, 123, 124 first identified for a LB action, it is initially verified whether the selected UEs 121, 122, 123, 124 belong to the group of UEs that has recently been transferred to the second frequency carrier F2 by a UL triggered IFHO, i.e. if they belong to pool M or not. This is performed to ensure that these UEs are not selected for an immediate LB mechanism. Thus, the network node 112 evaluates whether or not each of the at least one UE 121, 122, 123, 124 has resided at the F2 carrier for a respective time period which is below the first threshold value. This may e.g. be performed by checking the information of all respective UEs 121, 122, 123, 124 stored in the (UIT).

If the UE 121, 122, 123, 124 has not spent a sufficient amount of time in the second frequency carrier F2 it may be evaluated further before being flagged for LB action, i.e. being a candidate for LB. Thus, when any one or more first UEs 121, 122 out of the at least one UE 121, 122, 123, 124 have resided at the F2 carrier for a respective time period which is below the first threshold value the network node 110 decides that the one or more first UEs 121, 122 shall be put through a further evaluation for LB.

Action 404a. For each UE 121, 122, 123, 124 evaluated, if the UE does not belong to pool M it may be assumed that the UE has spent a sufficient amount of time in the second frequency carrier F2, i.e. it belongs to Pool N. Then this UE may be allowed to proceed with LB using legacy LB procedures, action 404b. Thus, when any one or more second UEs 123, 124 out of the at least one UE 121, 122, 123, 124 have resided at the F2 carrier for a respective time period which is not below the first threshold value, the network node 112 decides that each of the one or more second UEs 123, 124 is a candidate for LB.

### Pool M UEs substitution by Pool N UEs for LB

As have been hinted at above, it is preferable that the active UEs 121, 122, 123, 124 that have resided in the F2 carrier for the longest time period will be transferred from the F2 carrier to a another carrier through a LB action first. This ensures fairness amongst the selected LB candidates. This may be performed by giving an advantage or weightage to UEs 121, 122, 123, 124 coming by UL Triggered IFHO to the F2 carrier such that they remain in the current carrier F2.

Action 405a and 405b. Thus, according to some embodiments it is checked whether all of the second UEs 123, 124, also referred to as Pool N UEs 123, 124 can substitute the first UEs 121, 122, also referred to as Pool M UEs 121, 122, or not.

When all of the one or more first UEs 121, 122 can be substituted by second UEs 123, 124, the network node 112 replaces all of the one or more first UEs 121, 122 with second UEs 123, 124. All of the first UEs 121, 122 are then flagged as not being candidates for LB, i.e. the network node 112 decides that all of the one or more first UEs 121, 122 are not candidates for LB. A normal legacy LB mechanism on the second UEs 123, 124 may then follow when the condition is accomplished, action 404b. This ensures that if the first UEs 121, 122 which have just recently arrived at carrier F2 may be replaced by second UEs 123, 124, then the first UEs 121, 122 may stay in the carrier F2 for a longer duration of time. If it is not possible to replace all of the first UEs 121, 122 then a further evaluation may be performed on the first UEs 121, 122 to decide whether they should be identified for LB action.

### QCI validation for Pool M UEs

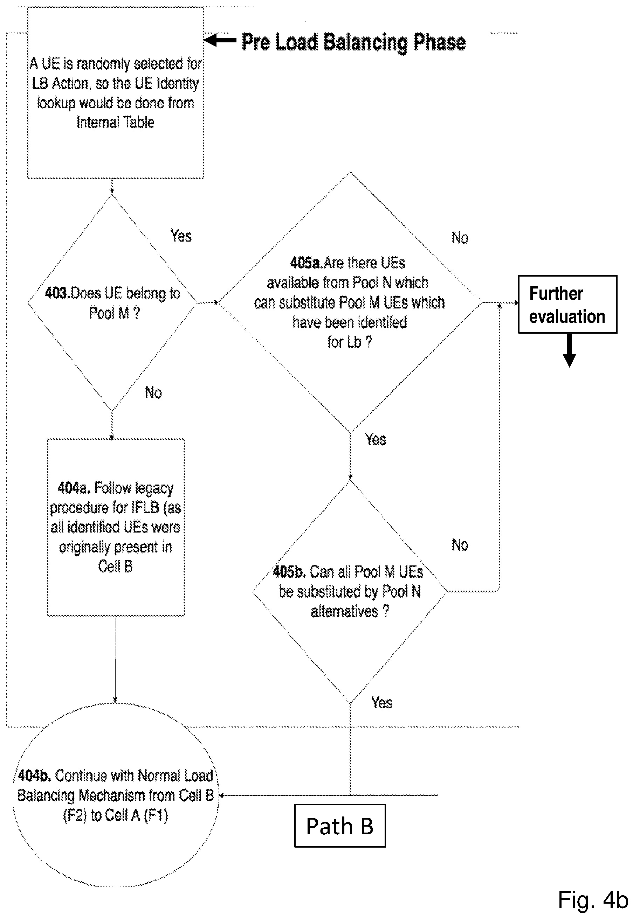

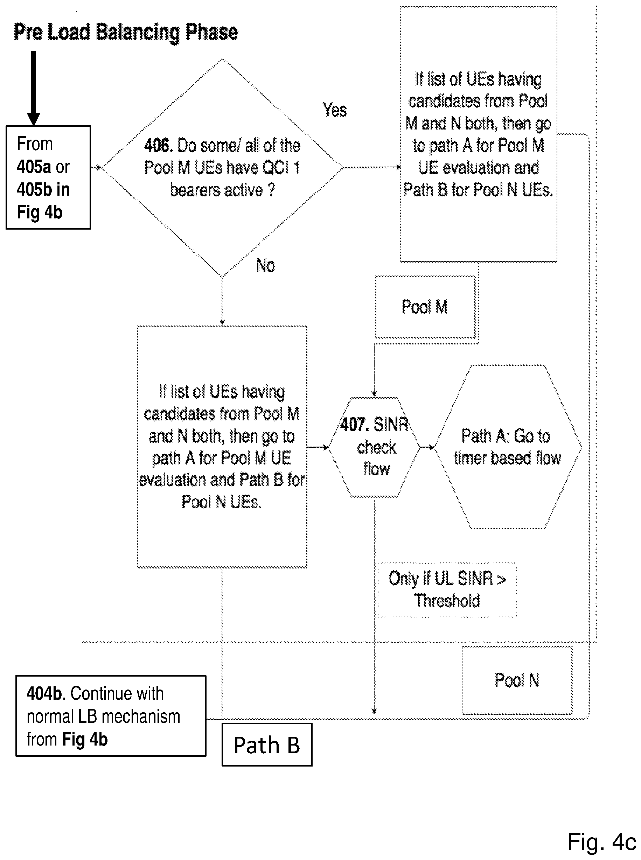

Action 406. E.g. in case the second UEs 122, 123 are not able to make a complete substitution for the first UEs 121, 122 identified as LB candidates, a further condition check whether the communication of some of the first UEs 121, 122 comprises VoLTE bearers, also referred to as QCI 1 bearers, or not may be performed. When the communication of a certain UE 121, 122 comprises VoLTE bearers, the network node 112 decides that said UE 121, 122 shall be shall be put through a yet further evaluation for LB. The remaining UEs 121, 122 are identified for LB action, e.g. according to the normal legacy LB mechanism. Thus, as can be seen in the flow chart depicted in Figure 4 these UEs 121, 122 from pool M having QCI 1 bearers are directed towards the "path A" algorithm while the remaining LB candidate UEs 121, 122 from pool M are directly routed to "path B".

### UL SINR Evaluation for Pool M UEs

Action 407. According to some embodiments, a UL SINR evaluation may e.g. be performed on those of the first UEs 121, 122 whose communication does not comprise VoLTE, i.e. pool M non-VoLTE UEs 121, 122. This may be performed in order to ensure that LB only occurs if an estimated UL SINR of the target cell is a above a predefined threshold. This prevents the UE 121, 122 being load balanced from landing in the UL search zone of a target cell. Thus, the network node 112 may obtain a respective estimated UL SINR of a respective target cell for the LB procedure of the one or more first UEs 121, 122.

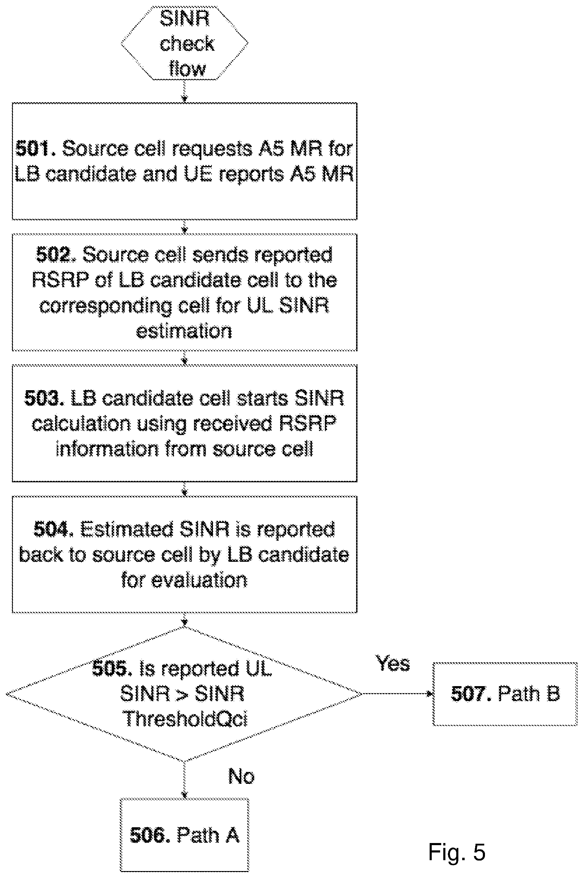

An example of a process for UL SINR estimation for UEs residing in the F2 carrier of cell 12 is illustrated in Figure 5 and may proceed according to the following actions:
Action 501. The network node 112 of the cell 12 here referred to as the source cell 12, requests an A5 measurement report from the UE 121, 122. An A5 measurement report is a sent by UE when the transmitted signal strength or quality of the serving cell becomes worse than a configured threshold 1 and the transmitted signal strength or quality on a physically different frequency of a neighboring cell becomes stronger than another configured threshold 2. In response, the UE 121, 122 sends an A5 measurement report of the LB candidates of the source cell 12.

Action 502. Upon receiving the A5 measurements report from the UE 121, 122, the network node 112 communicates the RSRP obtained from A5 measurement report to the respective network nodes of the LB candidate target cells, and requests reports of estimated UL SINR.

Action 503. The network nodes of the LB candidate target cells compute the SINR values for UE 121, 122. This may be performed with respect to RSRP and RSRQ values obtained from the RSRP value reported by the Source network for the respective UEs 121, 122.

Action 504. Thereafter, the estimated values of the UL SINRs are reported back to network node 112 of the source cell 12.

Action 505. The network node 112 of the source cell 12 compares the reported UL SINR values with a second threshold, e.g. referred to as ULSINRThresholdQci. This is a minimum UL SINR threshold value required by the network node of the target cell 11 for the respective UEs 121, 122 to be allowed to undergo a transition from the source cell 12 to the target cell, e.g. cell 11. This is done to ensure the UE 121, 122 moving from the source cell 12 to the target cell lands up in sustainable SINR condition for consistent performance. This ensures that the UE does not end up in the UL search zone of the target cell.

Action 506. When the SINR obtained from a UE out of the one or more first UEs 121, 122 is below the second threshold value, the network node 112 decides that said UE shall be put through a yet further evaluation for LB. For the case when UL SINR of the target cell is found to be less than the second threshold with respect to a given LB candidate UE 121, 122 a timer based algorithm may be commenced as outlined in path A depicted in Figure 5. This is done so that the UE 121, 122 spends the maximum time in the source cell 12 based on a Last in Last Out algorithm. This increases the probability of the UL SINR condition of the target cell to recover.

Action 507. When the SINR obtained from a UE of the one or more first UEs 121, 122 is not below the second threshold value, the network node 112 decides that said UE is a candidate for LB. If the reported UL SINR of the target cell is greater than the second threshold, then a normal offload procedure may be performed resulting in LB candidate UEs 121, 122 landing in a target cell with a UL SINR which is better than the second threshold. This may be performed by routing LB candidate UEs 121, 122 to Path B in Figure 4, which is the legacy LB procedure.

The second UEs 123, 124, i.e. pool N users, may be immediately directed towards path B in Figure 4 leading them to a legacy LB mechanism.

### Path A

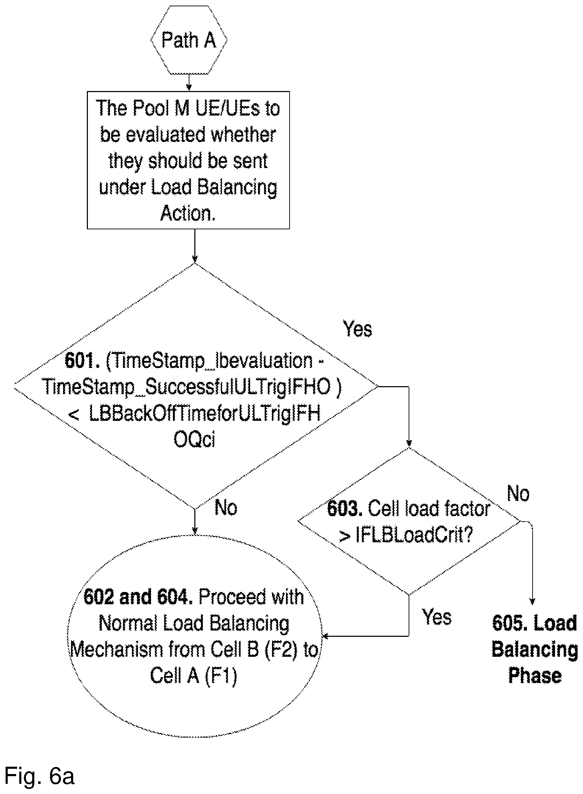

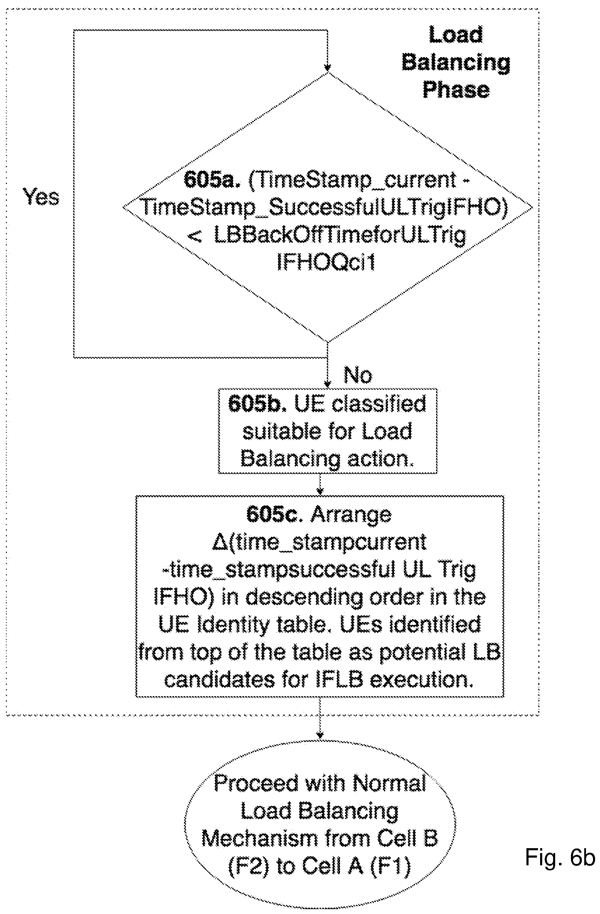

According to some embodiments of the example scenario the first UEs 121, 122, e.g. pool M UEs 121, 122 comprising both VoLTE and MBB connections, may be further evaluated to determine whether they should be sent under LB action or leverage the benefit of staying in same cell, i.e. the second frequency carrier F2 in cell 12, for a minimum stipulated time duration. This further evaluation may be referred to as the path A or the path A algorithm and is depicted in Figure 6.

An example of a process for further evaluation of whether UEs should be sent under LB action or leverage the benefit of staying in same cell is illustrated in Figures 6a and 6b and may proceed according to the following actions:
Action 601. This evaluation phase may be initiated by for each UE 121, 122 compare the time difference between the start of the LB evaluation and the time when the respective UE 121, 122 completed the successful uplink triggered IFHO to arrive is source cell 12 to the minimum time duration each UE is stipulated to remain in the second frequency carrier F2 in cell 12. The time or time stamp of the start of triggering of the LB evaluation may here be referred to as Time_stampLB_evaluation. The time or timestamp when the UE 121, 122 completed the successful uplink triggered IFHO to arrive at source cell 12 may herein be referred to as TimeStamp_SuccessfulULTrigIFHO. The time difference between TimestampLB_evaluation and Timestamp _SuccessfulULTrigIFHO may be referred to as Delta Time. As has been hinted and can be seen in Figure 4 this time comparison evaluation may be performed after the VoLTE evaluation performed as described above. The benefit of performing this time evaluation at VoLTE level, i.e. providing the backoff timer at QCI level, is to provide an added advantage for VoLTE users by keeping them out of the LB evaluation process. This ensures better Voice Over Internet Protocol (VoIP) integrity.

Action 602. When the time difference, Delta Time, between TimestampLB_evaluation and Timestamp_SuccessfulULTrigIFHO is greater than the minimum time duration for a respective UE 121, 122 is stipulated to remain in the second frequency carrier F2 then that UE 121, 122 has already served the minimum period during which it should stay in the second frequency carrier F2 in cell 12. Then that UE 121, 122 may be identified for LB action and a legacy LB action may be performed on that UE 121, 122.

Action 603. When the time difference, Delta Time, is less than the minimum time duration for the respective UE 121, 122 is stipulated to remain in the second frequency carrier F2, then that UE 121, 122 may be evaluated further before it is identified for LB action. Thus, those UEs 121, 122 are made to stay for some additional time in the second frequency carrier F2 in cell 11 through appropriate compensation, and may thus be excluded from immediate LB Action. The UEs 121,122 may stay longer at this stage because the cell load factor and subsequent delta2 time evaluations may collectively decide the time that UE 121, 122 will stay in source cell 12.

The UEs 121, 122 whom are decided to be evaluated further may then be evaluated with regards to the cell load factor of their current cell, i.e. the cell 12. The cell load factor may be obtained to determine the criticality of LB, i.e. if the cell is in risk of being overloaded and thus must be load balanced immediately through suitable offload to other frequency cells.

Action 604. When the cell load factor is higher than a third threshold, then the LB procedure gets precedence. Further cell offloading would then be performed by the legacy LB mechanism, offloading the UEs 121, 122 from cell 12 to e.g. cell 11 for all identified LB candidates. This means that even those UEs 121, 122 who have not spent the minimum time in the second frequency carrier F2 in cell 12 would be identified for LB action and offloaded from cell 12.

Action 605. When the cell load factor is less than the third threshold the LB candidate UEs 121, 122 would be further evaluated before being identified for LB action. These UEs 121, 122 may then be load balanced based on the time they have spent in the second frequency carrier F2 as will be described below. This LB procedure may also be referred to as applying the temporal hysteresis algorithm.

Action 605a. As has been mentioned above, the LBBackoffTimeforULTrigIFHOQci may be the minimum time for which any UE 121, 122 which has moved to the second frequency carrier F2 in cell 12 via UL triggered IFHO must remain in the cell 12. Thus, the difference between the current time stamp for each UE 121, 122 and the time of arrival in the second frequency carrier F2, i.e. the TimeStamp_SuccessfulULTrigIFHO, may be compared with LBBackoffTimeforULTrigIFHOQCI during some of the different evaluations performed.

Generally, when the time spent in the second frequency carrier F2 is less than the minimum time stipulated, LBBackoffTimeforULTrigIFHOQCI, then no further action is taken until the time difference exceeds the minimum time stipulated. Though, as has been mentioned above, this criterion may be disregarded if the cell load factor is above a critical threshold.

When the time spent in the second frequency carrier F2 is greater than the minimum time stipulated, the UE 121, 122 becomes available to undergo an LB action which will be described below.

### Load Balancing Phase

An example of the load balancing phase is illustrated in Figure 6b and may proceed according to the following actions.

Action 605a. As have been described above, as long as the time spent in the second frequency carrier F2 is less than the minimum time stipulated, LBBackoffTimeforULTrigIFHOQCI, then no further action is taken until the time difference exceeds the minimum time stipulated.

Action 605b. According to some embodiments of the example scenario, the UEs 121, 122 who have spent the minimum time stipulated in the second frequency carrier F2 are identified for LB action.

Action 605c. These UEs 121, 122 identified for LB action, may then be arranged in the UIT according to the time duration each UE 121, 122 has spent in the second frequency carrier F2, i.e. according to time_stampcurrent-TimeStamp_SuccessfulULTrigIFHO. The UEs 121, 122 are arranged in descending order of time duration in the UIT associated with the network node 112. Thereafter, the UE 121, 122 at the top of the table is selected for LB action since this the UE which has spent the maximum time in the source cell 12. Thus, when the one or more first UEs 121, 122 have resided at the F2 carrier for a respective time period that exceeds the first threshold value, the network node 112 performs load balancing on the one or more first UEs 121, 122 in descending order according to the respective time duration that the one or more first UEs 121, 122 have resided at the F2 carrier. This ensures a fair LB mechanism as the UE 121, 122 which has spent maximum time in the second frequency carrier F2 in cell 12 would be the first candidate selected for LB action, followed by the other UEs 121, 122 with shorter times spent in the carrier F2, e.g. depending on the subscription ratio comparison and further LB cycles required. A subscription ratio is a measure that reflects the amount of E-UTRAN Radio Access Bearer (E-RAB) in the cell in relation to the amount the operator is prepared to accommodate with respect to the achievable Quality of Service (QoS) and user experience.

The above steps embody the sequential stages of the example scenario algorithm and how it ensures that the optimal UEs 121, 122, 123, 124 are identified as LB candidates.

A further advantage of embodiments herein is that they reduce the to and fro between two carriers due to different IFHO triggers, e.g. UL triggered versus load based, by introducing temporal hysteresis. This ensures a better end user experience.

Another advantage is that VoLTE and MBB users may be separated, e.g. by using different timers, allowing for improved mobility mechanism for VoLTE call handling based on UL call quality.

A yet further advantage is that an ageing based LB mechanism, i.e. based on residence time in the carrier, secures the most recently transitioned UEs and a fair estimation and selection of UEs to be load balanced. Furthermore, the solution is compliant with 5G speech services for NSA option 3X/7X or option 4.

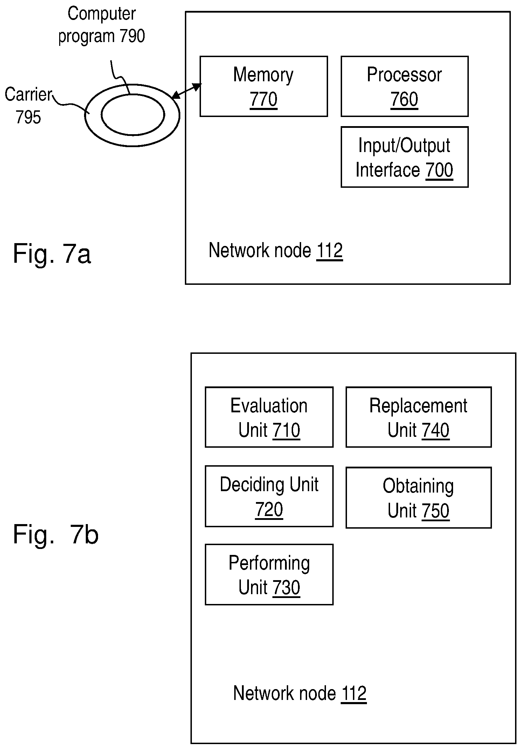

To perform the method actions above for handling load balancing of at least one User Equipment, UE, 121, 122, 123, 124 the network node 112 may comprise the arrangement depicted in Figures 7a and 7b. As mentioned above, the at least one UE 121, 122, 123, 124 is adapted to having performed a respective handover to a Second Frequency, F2, carrier provided by the network node 112 in a communication within a wireless communication network 100.

The network node 112 may comprise an input and output interface 700 configured to communicate, e.g. with the at least one UE 121, 122, 123, 124. The input and output interface may comprise a wireless receiver (not shown) and a wireless transmitter (not shown).

The network node 112 is configured to, e.g. by means of an evaluation unit 710 in the network node 112, evaluate whether or not each of the at least one UE 121, 122, 123, 124 has resided at the F2 carrier for a respective time period which is below a first threshold value.

The network node 112 is further configured to, when any one or more first UEs 121, 122 out of the at least one UE 121, 122, 123, 124 have resided at the F2 carrier for a respective time period which is below the first threshold value, e.g. by means of a deciding unit 720 in the network node 112, decide that the one or more first UEs 121, 122 shall be put through a further evaluation for load balancing,

The network node 112 is further configured to, when any one or more second UEs 123, 124 out of the at least one UE 121, 122, 123, 124 have resided at the F2 carrier for a respective time period which is not below the first threshold value, e.g. by means of the deciding unit 720, decide that each of the one or more second UEs 123, 124 is a candidate for load balancing.

The network node 112 may further be configured to, e.g. by means of a performing unit 730 in the network node 112, perform the further evaluation of the one or more first UEs 121, 122. This further evaluation will be described below.

The network node 112 may perform the further evaluation by being further configured to, when all of the first UEs 121, 122 cannot be substituted by second UEs 123, 124, e.g. by means of the deciding unit 720, decide that the one or more first UEs 121, 122 shall be put through a yet further evaluation for load balancing.

The network node 112 may perform the further evaluation by being further configured to, when all of the one or more first UEs 121, 122 can be substituted by second UEs 123, 124, e.g. by means of a replacement unit 740 in the network node 112, replace all of the one or more first UEs 121, 122 with second UEs 123, 124.

Having replaced all of the first UEs 121, 122 with second UEs 123, 124 the network node 112 may then be configured to, e.g. by means of the deciding unit 720, decide that all of the one or more first UEs 121, 122 are not candidates for load balancing.

The network node 112 may further be configured to, e.g. by means of the performing unit 730 in the network node 112, perform the further evaluation of the one or more first UEs 121, 122. This further evaluation will be described below.

The network node 112 may perform the further evaluation by being further configured to, when a communication of a UE 121, 122 out of the one or more first UEs 121, 122 comprises a Voice over Long Term Evolution, VoLTE, bearer, e.g. by means of the deciding unit 720, decide that said UE 121, 122 shall be shall be put through a yet further evaluation for load balancing.

The network node 112 may perform the further evaluation by being further configured to, when a communication of a UE 121, 122 out of the one or more first UEs 121, 122 does not comprise a VoLTE bearer, e.g. by means of the deciding unit 720, decide that said UE 121, 122 is a candidate for load balancing.

The network node 112 may further be configured to, e.g. by means of the performing unit 730 in the network node 112, perform the further evaluation of the one or more first UEs 121, 122. This further evaluation will be described below.

The network node 112 may perform the further evaluation by being further configured to, e.g. by means of an obtaining unit 750 in the network node 112, obtain a respective Signal-to-Interference-plus-Noise ratio, SINR, of a respective target cell for the load balancing procedure of the one or more first UEs 121, 122.

When the SINR obtained for a UE out of the one or more first UEs 121, 122 is below a second threshold value, the network node 112 may be further configured to, e.g. by means of the deciding unit 720, decide that said UE hall be put through a yet further evaluation for load balancing.

When the SINR obtained for a UE of the one or more first UEs 121, 122 is not below the second threshold value, the network node 112 may be further configured to, e.g. by means of the deciding unit 720, decide that said UE is a candidate for load balancing.

The network node 112 may further be configured to, e.g. by means of the performing unit 730 in the network node 112, perform the further evaluation of the one or more first UEs 121, 122. This further evaluation will be described below.

When the one or more first UEs 121, 122 have resided at the F2 carrier for a respective time period that exceeds the first threshold value, the network node 112 may be further configured to, e.g. by means of the performing unit 730, perform load balancing on the one or more first UEs 121, 122 in descending order of time duration according to the respective time duration that the one or more first UEs 121, 122 have resided at the F2 carrier.

The embodiments herein may be implemented through a respective processor or one or more processors, such as the processor 760 of a processing circuitry in the network node 112 depicted in Figure 7a, together with respective computer program code for performing the functions and actions of the embodiments herein. The program code mentioned above may also be provided as a computer program product, for instance in the form of a data carrier carrying computer program code for performing the embodiments herein when being loaded into the network node 112. One such carrier may be in the form of a CD ROM disc. It is however feasible with other data carriers such as a memory stick. The computer program code may furthermore be provided as pure program code on a server and downloaded to the network node 112.

The network node 112 may further comprise a memory 770 comprising one or more memory units. The memory 770 comprises instructions executable by the processor in network node 112.

The memory 770 is arranged to be used to store e.g. data, configurations, and applications to perform the methods herein when being executed in the network node 112.

In some embodiments, a respective computer program 790 comprises instructions, which when executed by the respective at least one processor 760, cause the at least one processor of the network node 112 to perform the actions above.

In some embodiments, a respective carrier 795 comprises the respective computer program, wherein the carrier is one of an electronic signal, an optical signal, an electromagnetic signal, a magnetic signal, an electric signal, a radio signal, a microwave signal, or a computer-readable storage medium.

### Further Extensions and Variations

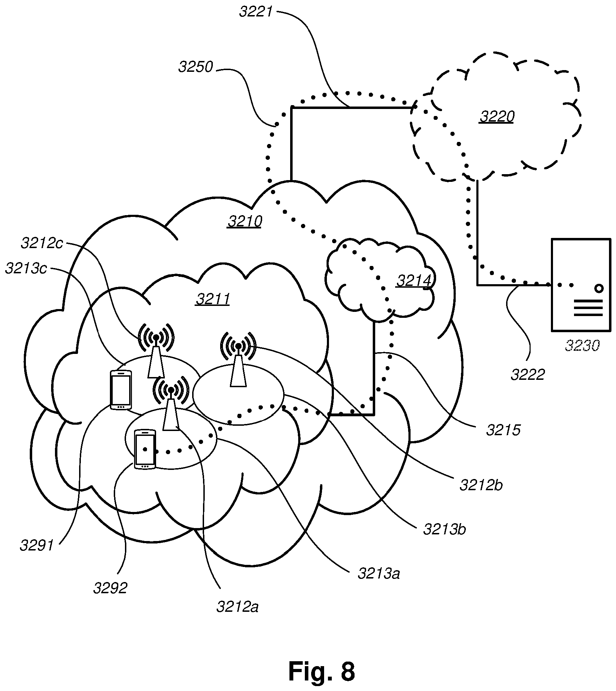

With reference to Figure 8, in accordance with an embodiment, a communication system includes a telecommunication network 3210 such as the wireless communications network 100, e.g. an IoT network, or a WLAN, such as a 3GPP-type cellular network, which comprises an access network 3211, such as a radio access network, and a core network 3214. The access network 3211 comprises a plurality of base stations 3212a, 3212b, 3212c, such as the network node 111, 112, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 8 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

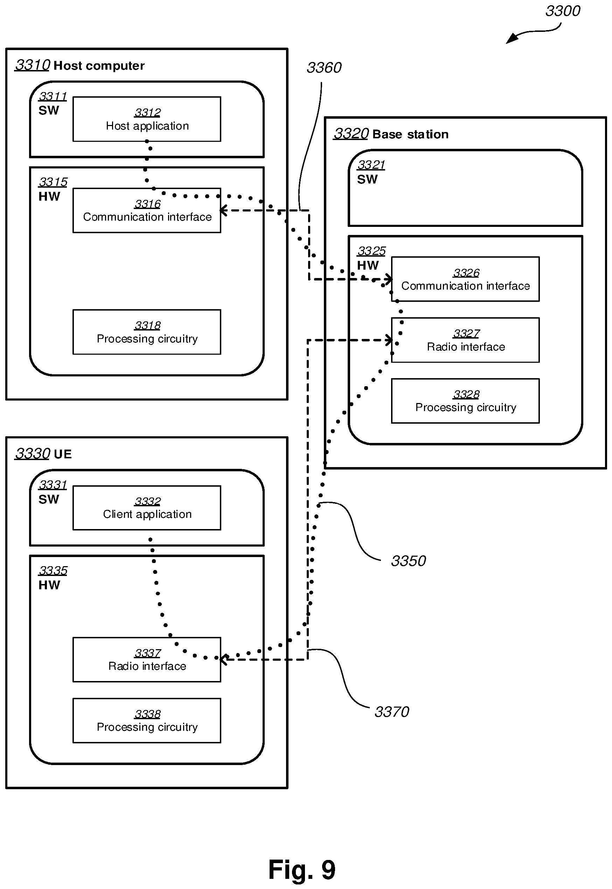

Example implementations, in accordance with an embodiment, of the UE, base station and host computer discussed in the preceding paragraphs will now be described with reference to Figure 9. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown) served by the base station 3320. The communication interface 3326 may be configured to facilitate a connection 3360 to the host computer 3310. The connection 3360 may be direct or it may pass through a core network (not shown in Figure 9) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

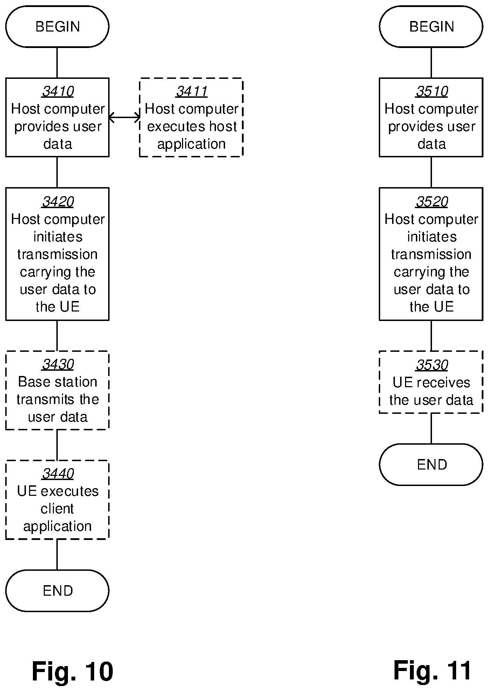

It is noted that the host computer 3310, base station 3320 and UE 3330 illustrated in Figure 9 may be identical to the host computer 3230, one of the base stations 3212a, 3212b, 3212c and one of the UEs 3291, 3292 of Figure 10, respectively. This is to say, the inner workings of these entities may be as shown in Figure 9 and independently, the surrounding network topology may be that of Figure 8.

In Figure 9, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the applicable RAN effect: data rate, latency, power consumption, and thereby provide benefits such as corresponding effect on the OTT service: e.g. reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

Figure 10 is a flowchart illustrating a method implemented in a communication system, in accordance with one embodiment. The communication system includes a host computer, a base station such as the network node 110, and a UE such as the wireless device 120, which may be those described with reference to Figure 8 and Figure 9. For simplicity of the present disclosure, only drawing references to Figure 10 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

Figure 11 is a flowchart illustrating a method implemented in a communication system, in accordance with one embodiment. The communication system includes a host computer, a base station such as a AP STA, and a UE such as a Non-AP STA which may be those described with reference to Figure 8 and Figure 9. For simplicity of the present disclosure, only drawing references to Figure 11 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

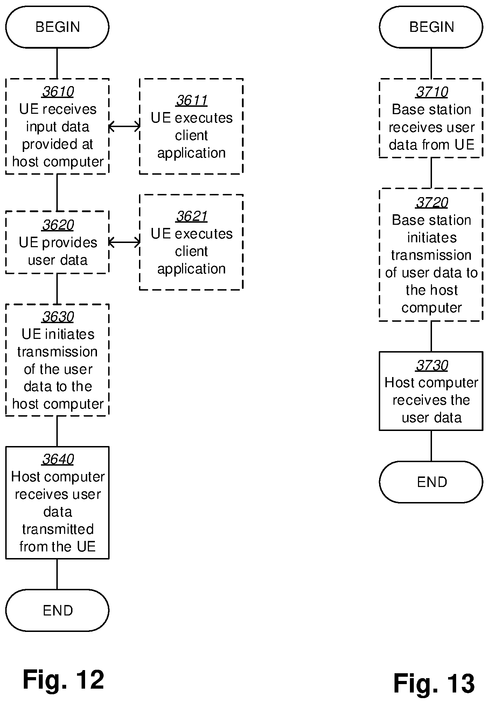

Figure 12 is a flowchart illustrating a method implemented in a communication system, in accordance with one embodiment. The communication system includes a host computer, a base station such as a AP STA, and a UE such as a Non-AP STA which may be those described with reference to Figure 8 and Figure 9. For simplicity of the present disclosure, only drawing references to Figure 12 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

Figure 13 is a flowchart illustrating a method implemented in a communication system, in accordance with one embodiment. The communication system includes a host computer, a base station such as a AP STA, and a UE such as a Non-AP STA which may be those described with reference to Figure 8 and Figure 9. For simplicity of the present disclosure, only drawing references to Figure 13 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as non-limiting, i.e. meaning "consist at least of".

## Claims

1. A method performed by a network node (112) for handling load balancing of at least one User Equipment, UE, (121, 122, 123, 124), which at least one UE (121, 122, 123, 124) has performed a respective handover to a Second Frequency, F2, carrier provided by the network node (112) in a communication within a wireless communication network (100), the method comprising:
*evaluating* (201) whether or not each of the at least one UE (121, 122, 123, 124) has resided at the F2 carrier for a respective time period which is below a first threshold value,
when any one or more first UEs (121, 122) out of the at least one UE (121, 122, 123, 124) have resided at the F2 carrier for a respective time period which is below the first threshold value *deciding* (202) that the one or more first UEs (121, 122) shall be put through a further evaluation for load balancing, before being chosen as a candidate for load balancing,
when any one or more second UEs (123, 124) out of the at least one UE (121, 122, 123, 124) have resided at the F2 carrier for a respective time period which is not below the first threshold value, *deciding* (203) that each of the one or more second UEs (123, 124) is a candidate for load balancing,
*performing* (204) the further evaluation of the one or more first UEs (121, 122) for load balancing, which further evaluation comprises:
when all of the first UEs (121, 122) cannot be substituted by second UEs (123, 124) for load balancing, *deciding* (205) that the one or more first UEs (121, 122) shall be put through a yet further evaluation for load balancing before it is decided whether they should be identified as load balancing candidates,
when all of the one or more first UEs (121, 122) can be substituted by second UEs (123, 124) for load balancing, *replacing* (206) all of the one or more first UEs (121, 122) with second UEs (123, 124) as candidates for load balancing and *deciding* (207) that all of the one or more first UEs (121, 122) are not candidates for load balancing.

2. The method according to claim 1, further comprising:
performing (208) the further evaluation of the one or more first UEs (121, 122) which further evaluation comprises:
when a communication of a UE (121, 122) out of the one or more first UEs (121, 122) comprises a Voice over Long Term Evolution, VoLTE, bearer, deciding (209) that said UE (121, 122) shall be put through a yet further evaluation for load balancing,
when a communication of a UE (121, 122) out of the one or more first UEs (121, 122) does not comprise a VoLTE bearer, deciding (210) that said UE (121, 122) is a candidate for load balancing.

3. The method according to any of claims 1-2, further comprising:
performing (211) the further evaluation of the one or more first UEs (121, 122) which further evaluation comprises:
obtaining (212) a respective Signal-to-Interference-plus-Noise ratio, SINR, of a respective target cell for the load balancing procedure of the one or more first UEs (121, 122),
when a SINR obtained for a UE out of the one or more first UEs (121, 122) is below a second threshold value, deciding (213) that said UE shall be put through a yet further evaluation for load balancing,
when a SINR obtained for a UE of the one or more first UEs (121, 122) is not below the second threshold value, deciding (214) that said UE is a candidate for load balancing.

4. The method according to any of claims 1-3, further comprising:
performing (215) the further evaluation of the one or more first UEs (121, 122) which further evaluation comprises:
when the one or more first UEs (121, 122) have resided at the F2 carrier for a respective time period that exceeds the first threshold value, performing (216) load balancing on the one or more first UEs (121, 122) in descending order according to the respective time duration that the one or more first UEs (121, 122) have resided at the F2 carrier.

5. A computer program comprising instructions, which when executed by a processor, cause the processor to perform actions according to any of the claims 1-4.

6. A carrier comprising the computer program of claim 5, wherein the carrier is one of an electronic signal, an optical signal, an electromagnetic signal, a magnetic signal, an electric signal, a radio signal, a microwave signal, or a computer-readable storage medium.

7. A network node (112) for handling load balancing of at least one User Equipment, UE, (121, 122, 123, 124), which at least one UE (121, 122, 123, 124) is adapted to having performed a respective handover to a Second Frequency, F2, carrier provided by the network node (112) in a communication within a wireless communication network (100), the network node (112) being configured to:
evaluate whether or not each of the at least one UE (121, 122, 123, 124) has resided at the F2 carrier for a respective time period which is below a first threshold value,
when any one or more first UEs (121, 122) out of the at least one UE (121, 122, 123, 124) have resided at the F2 carrier for a respective time period which is below the first threshold value, decide that the one or more first UEs (121, 122) shall be put through a further evaluation for load balancing, before being chosen as a candidate for load balancing,
when any one or more second UEs (123, 124) out of the at least one UE (121, 122, 123, 124) have resided at the F2 carrier for a respective time period which is not below the first threshold value, decide that each of the one or more second UEs (123, 124) is a candidate for load balancing,
perform the further evaluation of the one or more first UEs (121, 122) for load balancing, by being further configured to:
when all of the first UEs (121, 122) cannot be substituted by second UEs (123, 124) for load balancing, decide that the one or more first UEs (121, 122) shall be put through a yet further evaluation for load balancing before it is decided whether they should be identified as load balancing candidates,
when all of the one or more first UEs (121, 122) can be substituted by second UEs (123, 124) for load balancing, replace all of the one or more first UEs (121, 122) with second UEs (123, 124) as potential candidates for load balancing and decide that all of the one or more first UEs (121, 122) are not candidates for load balancing.

8. The network node (112) according to claim 7, further being configured to:
perform the further evaluation of the one or more first UEs (121, 122) by being further configured to:
when a communication of a UE (121, 122) out of the one or more first UEs (121, 122) comprises a Voice over Long Term Evolution, VoLTE, bearer, decide that said UE (121, 122) shall be put through a yet further evaluation for load balancing,
when a communication of a UE (121, 122) out of the one or more first UEs (121, 122) does not comprise a VoLTE bearer, decide that said UE (121, 122) is a candidate for load balancing.

9. The network node (112) according to any of claims 7-8, further being configured to:
perform the further evaluation of the one or more first UEs (121, 122) by being further configured to:
obtain a respective Signal-to-Interference-plus-Noise ratio, SINR, of a respective target cell for the load balancing procedure of the one or more first UEs (121, 122),
when a SINR obtained for a UE out of the one or more first UEs (121, 122) is below a second threshold value, decide that said UE shall be put through a yet further evaluation for load balancing,
when a SINR obtained from a UE of the one or more first UEs (121, 122) is not below the second threshold value, decide that said UE is a candidate for load balancing.

10. The network node (112) according to any of claims 7-9, further being configured to:
perform the further evaluation of the one or more first UEs (121, 122) by being further configured to:
when the one or more first UEs (121, 122) have resided at the F2 carrier for a respective time period that exceeds the first threshold value, perform load balancing on the one or more first UEs (121, 122) in descending order according to the respective time duration that the one or more first UEs (121, 122) have resided at the F2 carrier.

## Patentansprüche

1. Verfahren, durchgeführt durch einen Netzwerkknoten (112) zum Handhaben eines Lastausgleichs von mindestens einer Benutzervorrichtung, UE, (121, 122, 123, 124), wobei mindestens eine UE (121, 122, 123, 124) eine jeweilige Übergabe an einen Träger zweiter Frequenz, F2, durchgeführt hat, der durch den Netzwerkknoten (112) in einer Kommunikation innerhalb eines drahtlosen Kommunikationsnetzwerks (100) bereitgestellt wird, das Verfahren umfassend:
*Evaluieren* (201), ob sich jede der mindestens einen UE (121, 122, 123, 124) an einem F2-Träger für eine jeweilige Zeitperiode, die unter einem ersten Schwellenwert liegt, befunden hat oder nicht,
wenn sich eine beliebige oder mehrere erste UEs (121, 122) von der mindestens einen UE (121, 122, 123, 124) an dem F2-Träger für eine jeweilige Zeitperiode, die unter dem ersten Schwellenwert liegt, befunden haben, *Entscheiden* (202), dass die eine oder die mehreren ersten UEs (121, 122) einer weiteren Evaluierung für den Lastausgleich unterzogen werden, bevor sie als Kandidat für den Lastausgleich ausgewählt werden,
wenn sich eine beliebige oder mehrere zweite UEs (123, 124) von der mindestens einen UE (121, 122, 123, 124) an dem F2-Träger für eine jeweilige Zeitperiode, die nicht unter dem ersten Schwellenwert liegt, befunden haben, *Entscheiden* (203), dass jede der einen oder der mehreren zweiten UEs (123, 124) ein Kandidat für den Lastausgleich ist,
*Durchführen* (204), der weiteren Evaluierung der einen oder der mehreren ersten UEs (121, 122) für den Lastausgleich, wobei die weitere Evaluierung umfasst:
wenn alle der ersten UEs (121, 122) nicht durch zweite UEs (123, 124) für den Lastausgleich ersetzt werden können,
*Entscheiden* (205), dass die eine oder die mehreren ersten UEs (121, 122) einer noch weiteren Evaluierung für den Lastausgleich unterzogen werden, bevor entschieden wird, ob sie als Kandidaten für den Lastausgleich identifiziert werden sollen,
wenn alle der einen oder der mehreren ersten UEs (121, 122) durch zweite UEs (123, 124) für den Lastausgleich ersetzt werden können,
*Ersetzen* (206) aller der einen oder der mehreren ersten UEs (121, 122) mit zweiten UEs (123, 124) als Kandidaten für den Lastausgleich und *Entscheiden* (207), dass keine der einen oder der mehreren ersten UEs (121, 122) Kandidaten für den Lastausgleich sind.

2. Verfahren nach Anspruch 1, ferner umfassend:
Durchführen (208), der weiteren Evaluierung der einen oder der mehreren ersten UEs (121, 122), wobei die weitere Evaluierung umfasst:
wenn eine Kommunikation einer UE (121, 122) aus der einen oder den mehreren ersten UEs (121, 122) einen Voice-over-Long-Term-Evolution-Träger, VoLTE-Träger, umfasst, Entscheiden (209), dass die UE (121, 122) einer noch weiteren Evaluierung für den Lastausgleich unterzogen werden soll,
wenn eine Kommunikation einer UE (121, 122) aus der einen oder den mehreren ersten UEs (121, 122) keinen VoLTE-Träger umfasst, Entscheiden (210), dass die UE (121, 122) ein Kandidat für den Lastausgleich ist.

3. Verfahren nach einem der Ansprüche 1 bis 2, ferner umfassend:
Durchführen (211) der weiteren Evaluierung der einen oder der mehreren ersten UEs (121, 122), wobei die weitere Evaluierung umfasst:
Erhalten (212) eines jeweiligen Signal-zu-Interferenz-plus-Rausch-Verhältnisses, SINR, einer jeweiligen Zielzelle für den Lastausgleichsvorgang der einen oder der mehreren ersten UEs (121, 122),
wenn ein SNIR, die für eine UE aus der einen oder den mehreren ersten UEs (121, 122) erhalten wird, unter einem zweiten Schwellenwert liegt, Entscheiden (213), dass die UE einer noch weiteren Evaluierung für den Lastausgleich unterzogen werden soll,
wenn ein SNIR, der für eine UE der einen oder der mehreren ersten UEs (121, 122) erhalten wird, nicht unter dem zweiten Schwellenwert liegt, Entscheiden (214), dass die UE ein Kandidat für den Lastausgleich ist.

4. Verfahren nach einem der Ansprüche 1 bis 3, ferner umfassend:
Durchführen (215) der weiteren Evaluierung der einen oder der mehreren ersten UEs (121, 122), wobei die weitere Evaluierung umfasst:
wenn sich die eine oder die mehrere ersten UEs (121, 122) an dem F2-Träger für eine jeweilige Zeitperiode, die den ersten Schwellenwert überschreitet, befunden haben, Durchführen (216) eines Lastausgleichs auf der einen oder den mehreren ersten UEs (121, 122) in absteigender Reihenfolge gemäß der jeweiligen Zeitdauer, für die sich die ein oder die mehreren ersten UEs (121, 122) an dem F2-Träger befunden haben.

5. Computerprogramm, umfassend Anweisungen, die, wenn sie durch einen Prozessor ausgeführt werden, den Prozessor veranlassen, Aktionen nach einem der Ansprüche 1 bis 4 durchzuführen.

6. Träger, umfassend das Computerprogramm nach Anspruch 5, wobei der Träger eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

7. Netzwerkknoten (112) zum Handhaben des Lastausgleichs von mindestens einer Benutzervorrichtung, UE, (121, 122, 123, 124), wobei mindestens eine UE (121, 122, 123, 124) so angepasst ist, dass sie eine jeweilige Übergabe an einen Träger zweiter Frequenz, F2, durchgeführt hat, der durch den Netzwerkknoten (112) in einer Kommunikation innerhalb eines drahtlosen Kommunikationsnetzwerks (100) bereitgestellt wird, wobei der Netzwerkknoten (112) konfiguriert ist zum:
Bewerten, ob sich jede der mindestens einen UE (121, 122, 123, 124) an einem F2-Träger für eine jeweilige Zeitperiode, die unter einem ersten Schwellenwert liegt, befunden hat oder nicht,
wenn sich eine beliebige oder mehrere erste UEs (121, 122) von der mindestens einen UE (121, 122, 123, 124) an dem F2-Träger für eine jeweilige Zeitperiode, die unter dem ersten Schwellenwert liegt, befunden haben, Entscheiden, dass die eine oder die mehreren ersten UEs (121, 122) einer weiteren Evaluierung für den Lastausgleich unterzogen werden sollen, bevor sie als Kandidat für den Lastausgleich ausgewählt werden,
wenn sich eine beliebige oder mehrere zweite UEs (123, 124) von der mindestens einen UE (121, 122, 123, 124) an dem F2-Träger für eine jeweilige Zeitperiode, die nicht unter dem ersten Schwellenwert liegt, befunden haben, Entscheiden, dass jede der einen oder der mehreren zweiten UEs (123, 124) ein Kandidat für den Lastausgleich ist,
Durchführen der weiteren Evaluierung der einen oder der mehreren ersten UEs (121, 122) für den Lastausgleich, durch weiteres Konfigurieren:
wenn alle der ersten UEs (121, 122) nicht durch zweite UEs (123, 124) für den Lastausgleich ersetzt werden können,
Entscheiden, dass die eine oder die mehreren ersten UEs (121, 122) einer noch weiteren Evaluierung für den Lastausgleich unterzogen werden, bevor entschieden wird, ob sie als Kandidaten für den Lastausgleich identifiziert werden sollen,
wenn alle der einen oder der mehreren ersten UEs (121, 122) durch zweite UEs (123, 124) für den Lastausgleich ersetzt werden können,
Ersetzen aller der einen oder der mehreren ersten UEs (121, 122) mit zweiten UEs (123, 124) als potentielle Kandidaten für den Lastausgleich und Entscheiden, dass keine der einen oder der mehreren ersten UEs (121, 122) Kandidaten für den Lastausgleich sind.

8. Netzwerkknoten (112) nach Anspruch 7, der ferner konfiguriert ist zum:
Durchführen der weiteren Evaluierung der einen oder der mehreren ersten UEs (121, 122), durch weiteres Konfigurieren:
wenn eine Kommunikation einer UE (121, 122) aus der einen oder den mehreren ersten UEs (121, 122) einen Voice-over-Long-Term-Evolution-Träger, VoLTE-Träger, umfasst, Entscheiden, dass die UE (121, 122) einer noch weiteren Evaluierung für den Lastausgleich unterzogen werden soll,
wenn eine Kommunikation einer UE (121, 122) aus der einen oder den mehreren ersten UEs (121, 122) keinen VoLTE-Träger umfasst, Entscheiden, dass die UE (121, 122) ein Kandidat für den Lastausgleich ist.

9. Netzwerkknoten (112) nach einem der Ansprüche 7 bis 8, der ferner konfiguriert ist zum:
Durchführen der weiteren Evaluierung der einen oder der mehreren ersten UEs (121, 122), durch weiteres Konfigurieren:
Erhalten eines jeweiligen Signal-zu-Interferenz-plus-Rausch-Verhältnisses, SINR, einer jeweiligen Zielzelle für den Lastausgleichsvorgang der einen oder der mehreren ersten UEs (121, 122),
wenn ein SNIR, die für eine UE aus der einen oder den mehreren ersten UEs (121, 122) erhalten wird, unter einem zweiten Schwellenwert liegt, Entscheiden, dass die UE einer noch weiteren Evaluierung für den Lastausgleich unterzogen werden soll,
wenn ein SNIR, der für eine UE der einen oder der mehreren ersten UEs (121, 122) erhalten wird, nicht unter dem zweiten Schwellenwert liegt, Entscheiden, dass die UE ein Kandidat für den Lastausgleich ist.

10. Netzwerkknoten (112) nach einem der Ansprüche 7 bis 9, der ferner konfiguriert ist zum:
Durchführen der weiteren Evaluierung der einen oder der mehreren ersten UEs (121, 122), durch weiteres Konfigurieren:
wenn sich die eine oder die mehreren ersten UEs (121, 122) an dem F2-Träger für eine jeweilige Zeitperiode, die den ersten Schwellenwert überschreitet, befunden haben, Durchführen eines Lastausgleichs auf der einen oder den mehreren ersten UEs (121, 122) in absteigender Reihenfolge gemäß der jeweiligen Zeitdauer, für die sich die eine oder die mehreren ersten UEs (121, 122) an dem F2-Träger befunden haben.

## Revendications

1. Procédé réalisé par un nœud de réseau (112) permettant de gérer un équilibrage de charge d'au moins un équipement d'utilisateur, UE, (121, 122, 123, 124), lequel au moins un UE (121, 122, 123, 124) a effectué un transfert respectif vers une porteuse de seconde fréquence (F2) fournie par le nœud de réseau (112) dans une communication au sein d'un réseau de communication sans fil (100), le procédé comprenant :
*l'évaluation* (201) si chacun de l'au moins un UE (121, 122, 123, 124) a résidé ou pas sur la porteuse F2 pour un laps de temps respectif qui est inférieur à une première valeur seuil,
lorsqu'un quelconque ou plusieurs premiers UE (121, 122) parmi l'au moins un UE (121, 122, 123, 124) ont résidé sur la porteuse F2 pour un laps de temps respectif qui est inférieur à la première valeur seuil, *la décision* (202) que le ou les premiers UE (121, 122) doivent être soumis à une évaluation supplémentaire pour un équilibrage de charge, avant d'être choisis comme candidats à un équilibrage de charge,
lorsqu'un quelconque ou plusieurs seconds UE (123, 124) parmi l'au moins un UE (121, 122, 123, 124) ont résidé sur la porteuse F2 pour un laps de temps respectif qui n'est pas inférieur à la première valeur seuil, *la décision* (203) que chacun du ou des seconds UE (123, 124) est un candidat à un équilibrage de charge,
*la réalisation* (204) de l'évaluation supplémentaire du ou des premiers UE (121, 122) pour un équilibrage de charge, dont l'évaluation supplémentaire comprend :
lorsque tous les premiers UE (121, 122) ne peuvent pas être remplacés par les seconds UE (123, 124) pour un équilibrage de charge,
*la décision* (205) que le ou les premiers UE (121, 122) doivent faire l'objet d'une évaluation supplémentaire pour un équilibrage de charge avant qu'il ne soit décidé s'ils doivent être identifiés comme candidats à un équilibrage de charge,
lorsque tous le ou les premiers UE (121, 122) peuvent être remplacés par des seconds UE (123, 124) pour un équilibrage de charge,
*le remplacement* (206) de tous le ou les premiers UE (121, 122) par des seconds UE (123, 124) en tant que candidats à un équilibrage de charge et la *décision* (207) que tous le ou les premiers UE (121, 122) ne sont pas candidats à un équilibrage de charge.

2. Procédé selon la revendication 1, comprenant en outre :
*la réalisation* (208) de l'évaluation supplémentaire du ou des premiers UE (121, 122), laquelle évaluation supplémentaire comprend :
lorsqu'une communication d'un UE (121, 122) parmi le ou les premiers UE (121, 122) comprend un support de voix sur l'évolution à long terme (VoLTE), la décision (209) que ledit UE (121, 122) doit être soumis à une nouvelle évaluation supplémentaire pour un équilibrage de charge,
lorsqu'une communication d'un UE (121, 122) parmi le ou les premiers UE (121, 122) ne comprend pas de support VoLTE, la décision (210) que ledit UE (121, 122) est un candidat à un équilibrage de charge.

3. Procédé selon l'une quelconque des revendications 1 à 2, comprenant en outre :
la réalisation (211) de l'évaluation supplémentaire du ou des premiers UE (121, 122), laquelle évaluation supplémentaire comprend :
l'obtention (212) d'un rapport signal sur interférence plus bruit (SINR) respectif d'une cellule cible respective pour la procédure d'équilibrage de charge du ou des premiers UE (121, 122),
lorsqu'un SINR obtenu pour un UE parmi le ou les premiers UE (121, 122) est inférieur à une seconde valeur seuil, la décision (213) que ledit UE doit être soumis à une nouvelle évaluation supplémentaire pour un équilibrage de charge,
lorsqu'un SINR obtenu pour un UE du ou des premiers UE (121, 122) n'est pas inférieur à la seconde valeur seuil, la décision (214) que ledit UE est un candidat pour un équilibrage de charge.

4. Procédé selon l'une quelconque des revendications 1 à 3, comprenant en outre :
la réalisation (215) de l'évaluation supplémentaire du ou des premiers UE (121, 122), laquelle évaluation supplémentaire en outre :
lorsque le ou les premiers UE (121, 122) ont résidé sur la porteuse F2 pour un laps de temps respectif qui est supérieur à la première valeur seuil, la réalisation (216) d'un équilibrage de charge sur le ou les premiers UE (121, 122) dans l'ordre décroissant selon la durée respective pendant laquelle le ou les premiers UE (121, 122) ont résidé sur la porteuse F2.

5. Programme informatique comprenant des instructions qui, lorsqu'elles sont exécutées par un processeur, amènent le processeur à effectuer des actions selon l'une quelconque des revendications 1 à 4.

6. Porteuse comprenant le programme informatique selon la revendication 5, dans lequel la porteuse est l'un parmi un signal électronique, un signal optique, un signal électromagnétique, un signal magnétique, un signal électrique, un signal radio, un signal micro-onde, ou un support de stockage lisible par ordinateur.

7. Nœud de réseau (112) pour gérer l'équilibrage de charge d'au moins un équipement d'utilisateur, UE, (121, 122, 123, 124), lequel au moins un UE (121, 122, 123, 124) est adapté pour avoir effectué un transfert respectif vers une porteuse de seconde fréquence (F2) fournie par le nœud de réseau (112) dans une communication au sein d'un réseau de communication sans fil (100), le nœud de réseau (112) étant configuré pour :
évaluer si chacun de l'au moins un UE (121, 122, 123, 124) a résidé ou pas sur la porteuse F2 pendant un laps de temps respectif qui est inférieur à une première valeur seuil,
lorsqu'un ou plusieurs premiers UE (121, 122) parmi l'au moins un UE (121, 122, 123, 124) ont résidé sur la porteuse F2 pour un laps de temps respectif qui est inférieur à la première valeur seuil, décider que le ou les premiers UE (121, 122) doivent être soumis à une évaluation supplémentaire pour un équilibrage de charge, avant d'être choisis comme candidats à un équilibrage de charge,
lorsqu'un quelconque ou plusieurs seconds UE (123, 124) parmi l'au moins un UE (121, 122, 123, 124) ont résidé sur la porteuse F2 pour un laps de temps respectif qui n'est pas inférieur à la première valeur seuil, décider que chacun des un ou plusieurs seconds UE (123, 124) est un candidat à un équilibrage de charge,
la réalisation de l'évaluation supplémentaire d'un ou de plusieurs premiers UE (121, 122) pour l'équilibrage de charge, en étant configuré en outre pour :
lorsque tous les premiers UE (121, 122) ne peuvent pas être remplacés par les seconds UE (123, 124) pour un équilibrage de charge,
décider que le ou les premiers UE (121, 122) doivent faire l'objet d'une évaluation supplémentaire pour un équilibrage de charge avant qu'il ne soit décidé s'ils doivent être identifiés comme candidats à un équilibrage de charge,
lorsque tous le ou les premiers UE (121, 122) peuvent être remplacés par des seconds UE (123, 124) pour un équilibrage de charge,
tous le ou les premiers UE (121, 122) par des seconds UE (123, 124) en tant que candidats à un équilibrage de charge et décider que tous le ou les premiers UE (121, 122) ne sont pas candidats à un équilibrage de charge.

8. Nœud de réseau (112) selon la revendication 7, étant en outre configuré pour :
réaliser l'évaluation supplémentaire du ou des premiers UE (121, 122) en étant configuré en outre pour :
lorsqu'une communication d'un UE (121, 122) parmi le ou les premiers UE (121, 122) comprend un support de voix sur évolution à long terme (VoLTE), décider que ledit UE (121, 122) doit être soumis à une nouvelle évaluation supplémentaire pour un équilibrage de charge,
lorsqu'une communication d'un UE (121, 122) parmi le ou les premiers UE (121, 122) ne comprend pas un support VoLTE, décider que ledit UE (121, 122) est un candidat pour un équilibrage de charge.

9. Nœud de réseau (112) selon l'une quelconque des revendications 7 à 8, étant en outre configuré pour :
réaliser l'évaluation supplémentaire du ou des premiers UE (121, 122) en étant configuré en outre pour :
obtenir un rapport signal sur interférence plus bruit (SINR) respectif d'une cellule cible respective pour la procédure d'équilibrage de charge du ou des premiers UE (121, 122),
lorsqu'un SINR obtenu pour un UE parmi le ou les premiers UE (121, 122) est inférieur à une seconde valeur seuil, décider que ledit UE doit être soumis à une nouvelle évaluation supplémentaire pour un équilibrage de charge,
lorsqu'un SINR obtenu à partir d'un UE du ou des premiers UE (121, 122) n'est pas inférieur à la seconde valeur seuil, décider que ledit UE est un candidat pour un équilibrage de charge.

10. Nœud de réseau (112) selon l'une quelconque des revendications 7 à 9, étant en outre configuré pour :
réaliser l'évaluation supplémentaire du ou des premiers UE (121, 122) en étant configuré en outre pour :
lorsque le ou les premiers UE (121, 122) ont résidé sur la porteuse F2 pour un laps de temps respectif qui est supérieur à la première valeur seuil, réaliser un équilibrage de charge sur le ou les premiers UE (121, 122) dans l'ordre décroissant selon la durée respective pendant laquelle le ou les premiers UE (121, 122) ont résidé sur la porteuse F2.
